# EUROPÄISCHE PATENTSCHRIFT

(11) **EP 3 440 425 B1**
(45) Veröffentlichungstag und Bekanntmachung des Hinweises auf die Patenterteilung: **19.02.2020**
(21) Anmeldenummer: 17712464.1
(22) Anmeldetag: 21.03.2017
(51) Int. Cl.: G01B 5/00, G01B 11/24

(54) **MOBILES MESSSYSTEM ZUM DREIDIMENSIONALEN OPTISCHEN VERMESSEN VON FAHRZEUGEN UND FAHRZEUGTEILEN**
MOBILE MEASUREMENT SYSTEM FOR THE THREE-DIMENSIONAL OPTICAL MEASUREMENT OF VEHICLES AND VEHICLE PARTS
SYSTÈME DE MESURE MOBILE POUR LA MESURE OPTIQUE TRIDIMENSIONNELLE DE VÉHICULES ET DE PARTIES DE VÉHICULES

(30) Priorität: 04.04.2016 DE 102016205519
(43) Veröffentlichungstag der Anmeldung: 13.02.2019
(73) Patentinhaber: Bayerische Motoren Werke Aktiengesellschaft, 80809 München (DE)
(72) Erfinder: BINDEL, Steffen, 04155 Leipzig (DE); KURTH, Christopher, 06188 Landsberg (DE); HEINZ, Michael, 04838 Jesewitz (DE); KÖNIG, Alexander, 98587 Rotterode (DE)
(86) Internationale Anmeldenummer: PCT/EP2017/056605
(87) Internationale Veröffentlichungsnummer: WO 2017/174341

(56) Entgegenhaltungen:
- DE-A1-102007 017 675
- DE-A1-102009 039 811
- DE-A1-102010 032 467
- JP-A- 2007 260 799

## Beschreibung

Die Erfindung betrifft ein Messsystem zum optischen Vermessen von Fahrzeugen und Fahrzeugteilen.

Seit einigen Jahren kommen im Automobilbau auch berührungslos und insbesondere optisch messende Systeme zum dreidimensionalen Messen bzw. Vermessen von Fahrzeugen und Fahrzeugteilen zum Einsatz. Solche Systeme sind bspw. aus der DE 10 2004 046 752 B4 und der DE 10 2014 106 641 A1 bekannt. Bei den vorbekannten Systemen wird der Messsensor mithilfe eines Mehrachsroboters oder dergleichen relativ zum Messobjekt (Fahrzeug oder Fahrzeugteil) bewegt. Es handelt sich um stationäre Systeme. Ferner ist bekannt, für einfache Messaufgaben den Messsensor auf einem mobilen bzw. portablen Stativ, bspw. einer in der DE 10 2008 001 617 A1 gezeigten Art, anzuordnen. Allerdings besteht hier das Problem der wiederholgenauen Positionierung zum Messobjekt. Außerdem ist damit ein automatisiertes oder teilautomatisiertes Vermessen des Messobjekts nicht möglich. DE 10 2010 032 467 A1 offenbart ein Messsystem zum dreidimensionalen optischen Vermessen von Fahrzeugen umfassend einen mobilen Messwagen mit einem Roboter, der einen 3D-Messsensor trägt.

Der Erfindung liegt die Aufgabe zugrunde ein Messsystem zum dreidimensionalen optischen Vermessen von Fahrzeugen und Fahrzeugteilen anzugeben, dass wenigstens einen mit dem Stand der Technik einhergehenden Nachteil nicht oder zumindest nur in einem verminderten Umfang aufweist.

Diese Aufgabe wird gelöst von einem erfindungsgemäßen Messsystem mit den Merkmalen des Anspruchs 1. Bevorzugte Weiterbildungen und Ausgestaltungen des erfindungsgemäßen Messsystems ergeben sich aus den abhängigen Ansprüchen, der nachfolgenden Beschreibung und den Figuren.

Das erfindungsgemäße mobile Messsystem zum dreidimensionalen optischen Vermessen von Fahrzeugen und Fahrzeugteilen umfasst:
- wenigstens eine Messhilfsvorrichtung, die wiederholgenau (d. h. mit definierter Lage und Ausrichtung) am Fahrzeug oder Fahrzeugteil angebracht oder auf der wiederholgenau das Fahrzeug oder Fahrzeugteil angeordnet werden kann; und
- einen mobilen Messwagen, auf welchem ein Roboter, der wenigstens einen Messsensor oder dergleichen trägt, angeordnet ist, wobei dieser mobile Messwagen ferner eine, insbesondere einstellbare, Kopplungseinrichtung zur mechanischen Kopplung mit der Messhilfsvorrichtung aufweist, wodurch eine wiederholgenaue Positionierung des Messwagens relativ zur Messhilfsvorrichtung und dadurch auch relativ zum Fahrzeug oder Fahrzeugteil ermöglicht wird.

Bevorzugt wird die Messhilfsvorrichtung nur zum Positionieren und Ausrichten des Messwagens relativ zum Messobjekt, d. h. dem Fahrzeug oder Fahrzeugteil, benötigt und kann dann wieder entfernt bzw. abgebaut werden, so dass der eigentliche Vorgang der Messung davon nicht beeinträchtigt werden kann.

Das erfindungsgemäße Messsystem weist einen angetriebenen Roboter auf, der in gewohnter Weise ein automatisiertes oder zumindest teilautomatisiertes Vermessen des Messobjekts ermöglicht. Ferner ist das erfindungsgemäße Messsystem mobil bzw. portabel ausgebildet und kann daher an verschiedenen Orten (Messorten) eingesetzt werden. Eine wiederholgenaue Positionierung zwischen dem Roboter und dem Messobjekt (Fahrzeug oder Fahrzeugteil) gelingt mittelbar durch die mechanische Kopplung zwischen dem Messwagen und der Messhilfsvorrichtung. Das erfindungsgemäße Messsystem ermöglicht die insbesondere für den automatischen Messbetrieb erforderliche wiederholgenaue Positionierung des Messwagens bzw. des daran befestigten Roboters relativ zu dem zu messenden Fahrzeug (auch ähnliche Fahrzeuge eines Derivats) oder Fahrzeugteil. Das erfindungsgemäße Messsystem ermöglicht ferner das einfache, zeitsparende und ergonomische Aufbauen und Ausrichten der Messsystemkomponenten. Ferner wird bei mehreren Messaufgaben ein einfaches, schnelles und ergonomisches Umpositionieren der Messsystemkomponenten ermöglicht. Zudem besteht eine hohe Flexibilität im Hinblick auf unterschiedliche Messaufgaben bzw. Anwendungsfälle.

Bevorzugt weist der Messwagen mehrere Bodenrollen auf (bspw. vier oder fünf), mit denen der Messwagen verfahren bzw. verschoben werden kann, und drei mittels Hubsystem (insbesondere mit elektrischem Antrieb) ausfahrbare Standfüße, die einen festen, stabilen und kippfreien Stand des Messwagens ermöglichen. Optional kann wenigstens eine der Bodenrollen auch mit einer Feststellbremse ausgestattet sein.

Bevorzugt weist auch die Messhilfsvorrichtung mehrere Bodenrollen auf, mit denen die Messhilfsvorrichtung verschoben werden kann, wobei bevorzugt wenigstens eine dieser Bodenrollen mit einer Feststellbremse ausgestattet ist.

Die Kopplungseinrichtung des Messwagens ist bevorzugt in allen drei Raumrichtungen einstellbar, um eine optimale messaufgabenabhängige Kopplung mit der Messhilfsvorrichtung zu ermöglichen.

Bevorzugt weist die Kopplungseinrichtung des Messwagens mehrere, bevorzugt zwei Kopplungsbolzen auf, wobei die Messhilfsvorrichtung mit korrespondierenden Kopplungsbohrungen, in die die Kopplungsbolzen formschlüssig eingreifen können, ausgebildet ist.

Die Kopplungsbolzen am Messwagen können motorisch (bspw. mittels Elektromotor) angetrieben sein, so dass diese selbsttätig in die Kopplungsbohrungen an der Messhilfsvorrichtung eingreifen können. Dadurch werden das Einkoppeln und Abkoppeln erleichtert und die Ergonomie verbessert.

Die Kopplungsbohrungen an der Messhilfsvorrichtung können in einem Raster angeordnet sein, wodurch unterschiedliche, gleichwohl jedoch definierte Relativpositionen zwischen dem Messwagen und der Messhilfsvorrichtung ermöglicht werden.

Der Messwagen und/oder die Messhilfsvorrichtung können Schiebehilfen bzw. Hilfsmittel für das manuelle Verschieben aufweisen. Hierbei handelt es sich bspw. um Handgriffe oder Griffstangen oder dergleichen.

Das erfindungsgemäße Messsystem wird bevorzugt zum Messen bzw. Vermessen eines Fahrzeugs, insbesondere eines Personenkraftwagens (PKW), verwendet. Hierzu ist die Messhilfsvorrichtung bevorzugt als L-förmiger Rahmen ausgebildet, dessen einer Rahmenschenkel an einer Längsseite des Fahrzeugs und dessen anderer Rahmenschenkel an der Vorder- oder Rückseite des Fahrzeugs positioniert werden kann. Dieser L-förmige Rahmen ermöglicht, dass der mobile Messwagen an jeder beliebigen Stelle um das Fahrzeug herum positioniert werden kann. Dadurch ergeben sich eine hohe Flexibilität und eine Baureihenunabhängigkeit. Bevorzugt umfasst das erfindungsgemäße Messsystem auch separate Positionierhilfs- bzw. Abstandselemente, die bspw. an den Rädern des Fahrzeugs beschädigungsfrei befestigbar oder abstützbar sind und die einen definierten und reproduzierbaren Abstand zwischen dem L-förmigen Rahmen und dem Fahrzeug einstellen bzw. vorgeben. Bevorzugt sind die Rahmenschenkel des Rahmens miteinander gelenkig verbunden und dadurch zusammenklappbar.

Das erfindungsgemäße Messsystem kann auch für andere, nicht-optische aber in ähnlicher, insbesondere äquivalenter Weise berührungslos messende Messverfahren verwendet werden.

Die Erfindung wird nachfolgend anhand der Figuren beispielhaft und in nicht einschränkender Weise näher erläutert. Die in den Figuren gezeigten und/oder nachfolgend erläuterten Merkmale können, auch losgelöst von konkreten Merkmalskombinationen, allgemeine Merkmale der Erfindung sein und die Erfindung weiterbilden.
- Fig. 1: zeigt in einer perspektivischen Ansicht einen zum erfindungsgemäßen Messsystem gehörenden Messwagen.
- Fig. 2: zeigt in einer perspektivischen Ansicht ein erfindungsgemäßes Messsystem beim Vermessen eines Fahrzeugs.
- Fig. 3: zeigt in einer perspektivischen Ansicht eine zum erfindungsgemäßen Messsystem gehörende Messhilfsvorrichtung mit einer darauf angeordneten Fahrzeugtür.

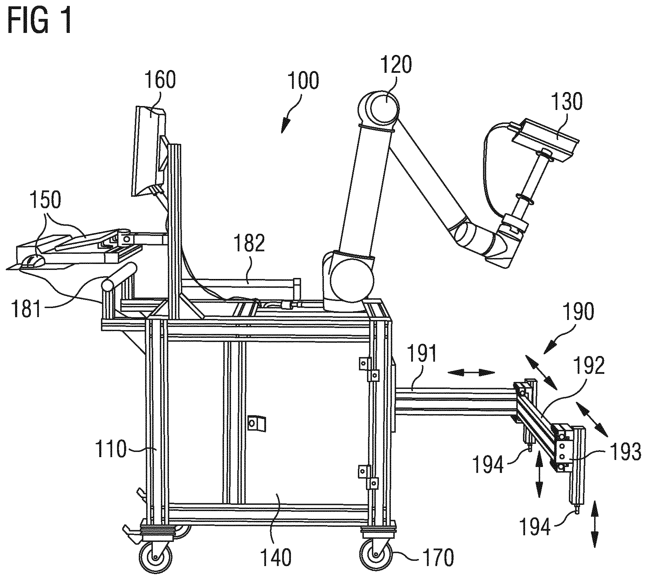

Der in Fig. 1 gezeigte Messwagen 100 weist ein aus Profilen zusammengesetztes Gestell 110 auf, an dem ein leichter Mehrachsroboter 120 befestigt ist. Der Roboterarm des Roboters 120 trägt einen Messsensor bzw. Messkopf 130 für das dreidimensionale optische Vermessen eines Messobjekts. Der Messsensor 130 kann mithilfe des Roboters 120 bewegt werden. Der Messablauf, einschließlich der Roboterarmbewegungen, wird von einer im Inneren des Gestells 110 angeordneten Steuereinrichtung 140, typischerweise ein Computer, gesteuert. Die Kommunikation mit der Steuereinrichtung 140 erfolgt über eine Eingabeeinrichtung (Tastatur und Maus) 150 und einen Monitor 160. Der Mess- bzw. Roboterwagen 100 ist mobil ausgebildet, wozu dieser mehrere Bodenrollen (Bockrollen) 170 und als Schiebehilfe fungierende Handgriffe 181 und 182 aufweist.

Der Messwagen 100 weist ferner eine Kopplungseinrichtung 190 auf, die zwei Kopplungsbolzen 194 umfasst. Die Kopplungsbolzen 194 sind horizontal verschiebbar an einer Schiene 192 befestigt. Die Schiene 192 ist über einen ein- und ausfahrbaren Träger 191 am Gestell 110 befestigt. Mittels motorisch angetriebener Stellmechanismen 193 können die Kopplungsbolzen 194 auch vertikal bewegt werden. Damit ist die Kopplungseinrichtung 190 in allen drei Raumrichtungen einstellbar, wie mit den Doppelpfeilen veranschaulicht. Die Funktion der Kopplungseinrichtung 190 wird nachfolgend noch näher erläutert.

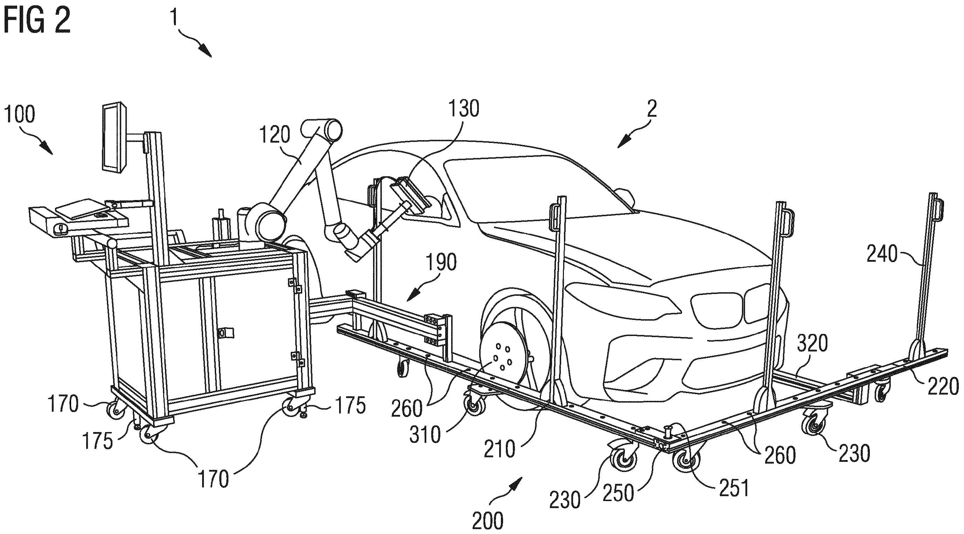

Fig. 2 zeigt ein erfindungsgemäßes Messsystem 1 mit einem Messwagen 100 gemäß Fig. 1 beim Messen bzw. Vermessen eines Fahrzeugs 2. Das Fahrzeug 2 und der mobile Messwagen 100 stehen auf einer Bodenfläche, bspw. einem Hallenboden. Um eine exakte und wiederholgenaue Positionierung des Messwagens 100 zum Fahrzeug 2 zu ermöglichen, ist eine zum Messsystem 1 gehörende Messhilfsvorrichtung 200 vorgesehen, wobei es sich um einen L-förmigen Wagen bzw. Rahmen handelt. Der ebenfalls mit Bodenrollen (Bockrollen) 230 ausgestattete und dadurch mobile Rahmen 200 weist zwei Rahmenschenkel 210 und 220 und mehrere als Schiebehilfe fungierende Griffstangen 240 auf. Die Rahmenschenkel 210 und 220 weisen bspw. eine Länge von 2 m bis 4 m auf. Die beiden rechtwinklig zueinander angeordneten Rahmenschenkel 210 und 220 sind über ein Gelenk 250 verbunden, so dass der Rahmen 200 bei Nichtgebrauch platzsparend zusammengeklappt werden kann. Das Gelenk 250 weist eine Arretierung auf, die mit dem Verrasterungsbolzen 251 gelöst werden kann.

In dem gezeigten Beispiel ist einer der Rahmenschenkel 210 an der rechten Längsseite des Fahrzeugs 2 positioniert und der andere Rahmenschenkel 220 ist an der Vorderseite des Fahrzeugs 2 positioniert. Die richtige Positionierung gelingt mithilfe eines ersten Positionierhilfselements 310, wobei es sich um eine Scheibe handelt, die magnetisch an den Radschrauben des rechten Vorderrads des Fahrzeugs 2 befestigt ist, und eines zweiten Positionierhilfselements 320, das unterlegkeilartig am linken Vorderrad des Fahrzeugs 2 abgestützt wird und nach vorne über die Fahrzeugumrisse herausragt. Die beiden Positionierhilfselemente 310 und 320 bilden Anschläge, an denen die Rahmenschenkel 210 und 220 des Rahmens 200 in Anlage gebracht werden können und dabei einen definierten Abstand zum Fahrzeug 2 einnehmen. Insofern können die Positionierhilfselemente 310 und 320 auch als Abstandselemente bezeichnet werden.

Der Messwagen 100 ist mit dem Rahmen 200 mechanisch gekoppelt, wozu die Kopplungsbolzen 194 der Kopplungseinrichtung 190 in korrespondierende Kopplungsbohrungen 260 im Rahmenschenkel 210 eingreifen. Durch den Formschluss ist der Messwagen 100 relativ zum Rahmen 200 und dadurch relativ zum Fahrzeug 2 ausgerichtet. Beide Rahmenschenkel 210 und 220 der Messhilfsvorrichtung 200 sind mit einer Vielzahl von Kopplungsbohrungen 260 ausgebildet, die in einem Raster (bspw. einem 100 mm-Raster) angeordnet sind. Der Messwagen 100 kann daher, je nach Messaufgabe, auch eine andere Relativposition zum Rahmen 200 einnehmen bzw. an anderer Stelle mit dem Rahmen 200 gekoppelt sein.

Das Messsystem 1 ist mobil und kann ortsunabhängig eingesetzt werden. Die Komponenten des Messsystems 1 werden am Messort bspw. in der in Fig. 2 gezeigten Anordnung aufgebaut, wie nachfolgend noch näher erläutert, und nach Abschluss der Messung wieder abgebaut. Dabei wird eine einfache und ergonomische Handhabung ermöglicht. Soll dasselbe Fahrzeug 2 oder derselbe Fahrzeugtyp später erneut vermessen werden, können die Systemkomponenten, auch an einem anderen Ort, in der selben Anordnung wieder aufgebaut werden, wobei innerhalb der erforderlichen Toleranz (diese liegt typischerweise im Zentimeterbereich) eine wiederholgenaue Positionierung des Messwagens 100 zum Fahrzeug 2 ermöglicht wird. Ferner kann die Stromversorgung durch einen im Messwagen 100 angeordneten Akkumulator erfolgen, so dass das Messsystem 1 auch unabhängig von einer externen Stromversorgung betreibbar ist.

Zum Aufbau des Messsystems 1 werden zunächst die Positionierhilfselemente 310 und 320 am Fahrzeug 2 angeordnet. Anschließend wird der Rahmen bzw. L-Wagen 200 an den Positionierhilfselementen 310 und 320 ausgerichtet und durch Feststellen der Bodenrollen 230 fixiert. Nun kann der Messwagen 100 in einer gewünschten oder durch frühere Messungen vorgegebenen Position mit dem Rahmen 200 gekoppelt werden, wozu dieser relativ zum Rahmen 200 positioniert wird, die Kopplungseinheit 190 eingestellt wird und die Kopplungsbolzen 194 mithilfe der Stellmechanismen 193 abgesenkt werden, so dass diese formschlüssig in die entsprechenden Kopplungsbohrungen 260 des Rahmens 200 eingreifen.

Der ausfahrbare Träger 191 und die Lagerschiene 192 der Kopplungseinheit 190 sind mit Skalen ausgestattet die das Wiederherstellen einer bestimmten Einstellung ermöglichen. Ferner sind die Bohrungen 260 am Rahmen 200 nummeriert, um das Wiederherstellen einer bestimmten Eingriffspaarung zu ermöglichen. Nachdem der Messwagen 100 richtig positioniert ist, wird dieser durch das Ausfahren von drei Standfüßen 175, die einen kippstabilen 3-Punkt-Stand ermöglichen, festgestellt. Optional können nun der Rahmen 200 und die Positionierhilfselemente 310 und 320 wieder entfernt werden, so dass die Messung dadurch nicht beeinträchtigt wird. Gegebenenfalls werden auf das zu vermessende Fahrzeug 2 noch Referenzmarken oder dergleichen aufgebracht. Nun kann mit der Messung begonnen werden, wozu bspw. der Roboter 120 bzw. dessen Roboterarm mit dem daran befestigten Messkopf 130 über die Eingabeeinrichtung 150 manuell gesteuert oder ein zuvor erzeugtes Messprogramm gestartet wird. (Das erfindungsgemäße Messsystem 1 ermöglicht, für den betreffenden Fahrzeugtyp oder einen ähnlichen Fahrzeugtyp gespeicherte Messprogramme gefahrlos per Automatik abzufahren, da die immer gleiche Positionierung des L-Wagens 200 zum Fahrzeug 2 die wiederholgenaue Positionierung und Ausrichtung des Messwagens 100 relativ zum Fahrzeug 2 gewährleistet.) Bevorzugt wird von der Steuereinrichtung 140 auch die Auswertung der Messung übernommen. Am Fahrzeug 2 können noch weitere Messungen vorgenommen werden, wozu gegebenenfalls auch eine Umpositionierung des Messwagens 100 und/oder des Rahmens 200 erfolgen kann.

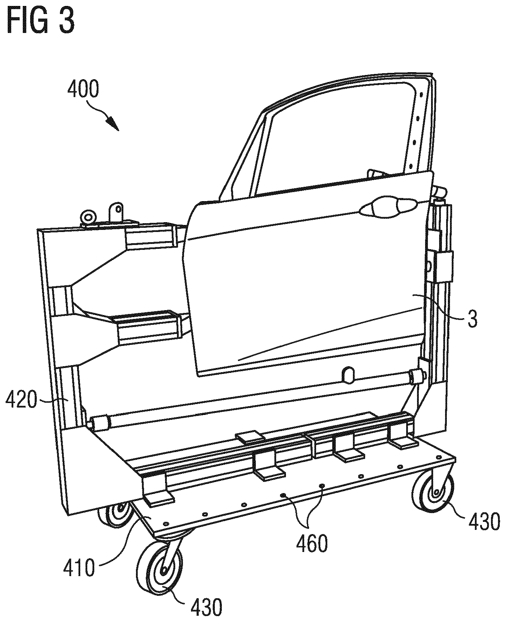

Fig. 3 zeigt eine andere Messhilfsvorrichtung 400, die eine Grundplatte 410 und ein Gestell 420 aufweist, an dem ein zu vermessendes Fahrzeugteil 3 (beispielhaft eine Fahrzeugtür) befestigt ist. Die Messhilfsvorrichtung 400 weist ferner feststellbare Bodenrollen 430 auf. Die Grundplatte 410 ist mit einer Vielzahl von Kopplungsbohrungen 460 ausgebildet, die in einem Raster angeordnet sind. Analog zu den vorausgehenden Erläuterungen kann der Messwagen 100 durch Eingriff der Kopplungsbolzen 194 in die Kopplungsbohrungen 460 relativ zur Messhilfsvorrichtung 400 und dadurch relativ zum Fahrtzeugteil 3 ausgerichtet werden. Auf einer derartigen Messhilfsvorrichtung 400 kann auch eine Bauteilgruppe oder ein ganzes Fahrzeug 2 angeordnet werden.

### Bezugszeichenliste

- 1: Messsystem
- 2: Fahrzeug
- 3: Fahrzeugteil
- 100: Messwagen
- 110: Gestell
- 120: Roboter
- 130: Messsensor
- 140: Steuereinrichtung
- 150: Eingabeeinrichtung
- 160: Monitor
- 170: Bodenrolle
- 175: Standfuß
- 181: Handgriff
- 182: Handgriff
- 190: Kopplungseinrichtung
- 191: Träger
- 192: Schiene
- 193: Stellmechanismus
- 194: Kopplungsbolzen
- 200: Messhilfsvorrichtung
- 210: Rahmenschenkel
- 220: Rahmenschenkel
- 230: Bodenrolle
- 240: Griffstange
- 250: Gelenk
- 251: Verrasterungsbolzen
- 260: Kopplungsbohrungen
- 310: Positionierhilfselement
- 320: Positionierhilfselement
- 400: Messhilfsvorrichtung
- 410: Grundplatte
- 420: Gestell
- 430: Bodenrolle
- 460: Kopplungsbohrungen

## Patentansprüche

1. Mobiles Messsystem (1) zum dreidimensionalen optischen Vermessen von Fahrzeugen (2) und Fahrzeugteilen (3), umfassend:
- eine Messhilfsvorrichtung (200, 400), die wiederholgenau am Fahrzeug (2) oder Fahrzeugteil (3) angebracht oder auf der wiederholgenau das Fahrzeug (2) oder Fahrzeugteil (3) angeordnet werden kann; und
- einen mobilen Messwagen (100), auf dem ein Roboter (120), der wenigstens einen Messsensor (130) für das dreidimensionale optische Vermessen trägt, angeordnet ist und der ferner eine Kopplungseinrichtung (190) zur mechanischen Kopplung mit der Messhilfsvorrichtung (200, 400) aufweist, wodurch eine wiederholgenaue Positionierung des Messwagens (100) relativ zur Messhilfsvorrichtung (200, 400) und dadurch relativ zum Fahrzeug (2) oder Fahrzeugteil (3) ermöglicht wird.

2. Mobiles Messsystem (1) nach Anspruch 1,
**dadurch gekennzeichnet, dass**
der Messwagen (100) mehrere Bodenrollen (170) aufweist, mit denen der Messwagen (100) verschoben werden kann, und drei mittels Hubsystem ausfahrbare Standfüße (175), die einen stabilen Stand des Messwagens (100) ermöglichen.

3. Mobiles Messsystem (1) nach einem der vorausgehenden Ansprüche,
**dadurch gekennzeichnet, dass**
die Messhilfsvorrichtung (200, 400) mehrere Bodenrollen (230, 430) aufweist, mit denen die Messhilfsvorrichtung (200, 400) verschoben werden kann, wobei wenigstens eine dieser Bodenrollen (230, 430) mit einer Feststellbremse ausgestattet ist.

4. Mobiles Messsystem (1) nach einem der vorausgehenden Ansprüche, **dadurch gekennzeichnet, dass**
die Kopplungseinrichtung (190) des Messwagens (100) in allen drei Raumrichtungen einstellbar ist.

5. Mobiles Messsystem (1) nach einem der vorausgehenden Ansprüche,
**dadurch gekennzeichnet, dass**
die Kopplungseinrichtung (190) des Messwagens (100) mehrere Kopplungsbolzen (194) aufweist und die Messhilfsvorrichtung (200, 400) mit korrespondierenden Kopplungsbohrungen (260, 460), in die die Kopplungsbolzen (194) eingreifen können, ausgebildet ist.

6. Mobiles Messsystem (1) nach Anspruch 5,
**dadurch gekennzeichnet, dass**
die Kopplungsbolzen (194) motorisch angetrieben sind, so dass diese selbsttätig in die Kopplungsbohrungen (260, 460) eingreifen können.

7. Mobiles Messsystem (1) nach Anspruch 5 und 6,
**dadurch gekennzeichnet, dass**
die Kopplungsbohrungen (260, 460) an der Messhilfsvorrichtung (200, 400) in einem Raster angeordnet sind, womit unterschiedliche Relativpositionen zwischen dem Messwagen (100) und der Messhilfsvorrichtung (200, 400) ermöglicht werden.

8. Mobiles Messsystem (1) nach einem der vorausgehenden Ansprüche,
**dadurch gekennzeichnet, dass**
der Messwagen (100) und/oder die Messhilfsvorrichtung (200, 400) wenigstens eine Schiebehilfe (181, 182, 240) für das manuelle Verschieben aufweist.

9. Mobiles Messsystem (1) nach einem der vorausgehenden Ansprüche zum Vermessen eines Fahrzeugs (2),
**dadurch gekennzeichnet, dass**
die Messhilfsvorrichtung (200) als L-förmiger Rahmen ausgebildet ist, dessen einer Rahmenschenkel (210) an einer Längsseite des Fahrzeugs (2) und dessen anderer Rahmenschenkel (220) an der Vorder- oder Rückseite des Fahrzeugs (2) positioniert wird, und dass hierfür separate Positionierhilfselemente (310, 320) vorgesehen sind, die an den Rädern des Fahrzeugs (2) befestigt oder abgestützt werden.

10. Mobiles Messsystem (1) nach Anspruch 9,
**dadurch gekennzeichnet, dass**
die Rahmenschenkel (210, 220) des L-förmigen Rahmens (200) mittels Gelenk (250) verbunden und dadurch zusammenklappbar sind.

## Claims

1. A mobile measurement system (1) for the three-dimensional optical measurement of vehicles (2) and vehicle parts (3), comprising:
- an auxiliary measurement device (200, 400), which can be attached with repeat accuracy to the vehicle (2) or vehicle part (3) or on which the vehicle (2) or vehicle part (3) can be arranged with repeat accuracy; and
- a mobile measurement trolley (100), on which a robot (120) which bears at least one measuring sensor (130) for the three-dimensional optical measurement is arranged, and which further has a coupling means (190) for mechanical coupling with the auxiliary measurement device (200, 400), as a result of which positioning of the measurement trolley (100) relative to the auxiliary measurement device (200, 400) and thereby relative to the vehicle (2) or vehicle part (3) with repeat accuracy is made possible.

2. A mobile measurement system (1) according to Claim 1,
**characterised in that**
the measurement trolley (100) has a plurality of ground rollers (170) with which the measurement trolley (100) can be displaced, and three supporting feet (175) which can be extended by means of a lifting system, which make it possible for the measurement trolley (100) to stand in a stable manner.

3. A mobile measurement system (1) according to one of the preceding claims,
**characterised in that**
the auxiliary measurement device (200, 400) has a plurality of ground rollers (230, 430) with which the auxiliary measurement device (200, 400) can be displaced, wherein at least one of these ground rollers (230, 430) is equipped with a locking brake.

4. A mobile measurement system (1) according to one of the preceding claims,
**characterised in that**
the coupling means (190) of the measurement trolley (100) is adjustable in all three directions in space.

5. A mobile measurement system (1) according to one of the preceding claims,
**characterised in that**
the coupling means (190) of the measurement trolley (100) has a plurality of coupling bolts (194) and the auxiliary measurement device (200, 400) is formed with corresponding coupling bores (260, 460) in which the coupling bolts (194) can engage.

6. A mobile measurement system (1) according to Claim 5,
**characterised in that**
the coupling bolts (194) are motor-driven, so that they can engage automatically in the coupling bores (260, 460).

7. A mobile measurement system (1) according to Claims 5 and 6,
**characterised in that**
the coupling bores (260, 460) on the auxiliary measurement device (200, 400) are arranged in a grid, which makes different relative positions between the measurement trolley (100) and the auxiliary measurement device (200, 400) possible.

8. A mobile measurement system (1) according to one of the preceding claims,
**characterised in that**
the measurement trolley (100) and/or the auxiliary measurement device (200, 400) has at least one pushing aid (181, 182, 240) for manual displacement.

9. A mobile measurement system (1) according to one of the preceding claims for measuring a vehicle (2),
**characterised in that**
the auxiliary measurement device (200) is designed as an L-shaped frame, one frame limb (210) of which is positioned on a long side of the vehicle (2) and the other frame limb (220) of which is positioned on the front or rear side of the vehicle (2), and **in that** separate auxiliary positioning elements (310, 320) which are fastened or supported on the wheels of the vehicle (2) are provided for this.

10. A mobile measurement system (1) according to Claim 9,
**characterised in that**
the frame limbs (210, 220) of the L-shaped frame (200) are connected by means of an articulation (250) and thereby are collapsible.

## Revendications

1. Système de mesure mobile (1) permettant d'effectuer des mesures optiques tridimensionnelles de véhicules (2) et de parties de véhicule (3) comprenant :
- un dispositif d'assistance de mesure (200, 400) qui est monté avec une précision de reproductibilité sur le véhicule (2) ou la partie de véhicule (3) ou peut être installé avec une précision de reproductivité sur le véhicule (2) ou la partie de véhicule (3), et
- un chariot de mesure mobile (100) sur lequel est installé un robot (120) qui porte au moins un capteur de mesure (130) permettant d'effectuer la mesure optique tridimensionnelle, et qui comporte en outre un dispositif de couplage (190) pour permettre un couplage mécanique avec le dispositif d'assistance de mesure (200, 400), de sorte qu'un positionnement précisément reproductible du chariot de mesure (100) par rapport au dispositif d'assistance de mesure (200, 400) et ainsi relativement au véhicule (2) ou à la partie de véhicule (3) soit possible.

2. Système de mesure mobile (1) conforme à la revendication 1,
**caractérisé en ce que**
le chariot de mesure (100) comporte plusieurs rouleaux de plancher (170) permettant de le déplacer par translation, et trois pieds d'appui (175) déployables au moyen d'un système de levage qui permettent un positionnement stable de ce chariot de mesure (100).

3. Système de mesure mobile (1) conforme à l'une des revendications précédentes,
**caractérisé en ce que**
le dispositif d'assistance de mesure (200, 400) comporte plusieurs rouleaux de plancher (230, 430) permettant de le déplacer par translation, au moins l'un de ces rouleaux de plancher (230, 430) étant équipé d'un frein de stationnement.

4. Système de mesure mobile (1) conforme à l'une des revendications précédentes,
**caractérisé en ce que**
le dispositif de couplage (190) du chariot de mesure (100) peut être réglé dans les trois directions spatiales.

5. Système de mesure mobile (1) conforme à l'une des revendications précédentes,
**caractérisé en ce que**
le dispositif de couplage (190) du chariot de mesure (100) comporte plusieurs goujons de couplage (194) et le dispositif d'assistance de mesure (200, 400) est réalisé avec des perçages de couplage correspondants (260, 460) dans lesquels peuvent venir en prise les goujons de couplage (194).

6. Système de mesure mobile (1) conforme à la revendication 5,
**caractérisé en ce que**
les goujons de couplage (194) sont entraînés de façon motorisée de sorte qu'ils puissent venir en prise automatiquement dans les perçages de couplage (260, 460).

7. Système de mesure mobile (1) conforme aux revendications 5 et 6,
**caractérisé en ce que**
les perçages de couplage (260, 460) du dispositif d'assistance de mesure (200, 400) sont disposés selon une trame de sorte que différentes positions relatives entre le chariot de mesure (100) et le dispositif d'assistance de mesure (200, 400) soient possibles.

8. Système de mesure mobile (1) conforme à l'une des revendications précédentes,
**caractérisé en ce que**
le chariot de mesure (100) et/ou le dispositif d'assistance de mesure (200, 400) comporte(nt) au moins un auxiliaire de glissement (181, 182, 240) pour permettre le glissement manuel.

9. Système de mesure mobile (1) conforme à l'une des revendications précédentes,
permettant d'effectuer une mesure d'un véhicule (2),
**caractérisé en ce que**
le dispositif d'assistance de mesure (200) est réalisé sous la forme d'un cadre en forme de L dont une branche (210) est positionnée sur un côté longitudinal du véhicule (2) et dont l'autre branche (220) est positionnée sur le côté avant ou sur le côté arrière du véhicule (2), et, à cet effet, il est prévu des éléments auxiliaires de positionnement (310, 320) qui sont fixés ou s'appuient sur les roues du véhicule (2).

10. Système de mesure mobile (1) conforme à la revendication 9,
**caractérisé en ce que**
les branches (210, 220) du cadre en forme de L (200) sont reliées par une articulation (250) et peuvent être ainsi rabattues l'une sur l'autre.
